# EUROPEAN PATENT APPLICATION

(11) **EP 1 798 161 A1**
(43) Date of publication of application: **20.06.2007**
(21) Application number: 06025749.0
(22) Date of filing: 12.12.2006
(51) Int. Cl.: B65D 81/34

(54) **Unfoldable laminar tub for the packaging, cooking and delivery of popcorn**

(30) Priority: 13.12.2005 AR P050105218
(71) Applicant: Arcusin, Carlos, Buenos Aires (AR)
(72) Inventor: Arcusin, Carlos, Buenos Aires (AR)
(74) Representative: Grünecker, Kinkeldey, Stockmair & Schwanhäusser Anwaltssozietät

(57) **Abstract**

This invention relates to the field of receptacles for the carriage and cooking of food. More particularly, this invention refers to an unfoldable laminar tub for the packaging, cooking and delivery of popcorn, which being capable of being spread and assembled is useful for the packaging and carriage of corn kernels as well as for its cooking and delivery.

## Description

### FIELD OF THE INVENTION

This invention relates to the field of receptacles for the carriage and cooking of food.

More particularly, this invention refers to an unfoldable laminar tub for the packaging, cooking and delivery of popcorn, which being capable of being spread and assembled is useful for the packaging and carriage of corn kernels as well as for its cooking and delivery.

### PRIOR ART

Different types of packages or packings used for the delivery and cooking of corn kernels are known up to date.

For instance, tubs or boxes are known which are provided in an assembled way and, as a consequence, they have certain disadvantages for their carriage and storage as well as for their position in supermarket gondolas and handling by consumers. Likewise, most of these tubs or boxes are especially designed according to their content, that is to say popcorn mixed with fat matter. Therefore, their constitution is conditioned by the type of special laminar or multi-layer materials to be used.

Likewise, flexible bags are known which are provided in a folded way and tightly closed. In comparison with tubs, said bags are subject to bigger inconveniences such as, for example, breakages or cuts in their laminar walls with a subsequent loss since the bag must be disposed. For this kind of problems, bags comprised of high strength and/or multi-layer laminar materials are used. However, said materials enhance their strength and functionality but increase costs considerably.

### ADVANTAGES AND PURPOSES:

An advantage of this tub is that while being a packaging means for corn kernels without fat matter, it may be easily converted, in a first instance, into a cooking chamber for corn kernels and then, after the popcorn had been obtained, into a delivery container for their consumption.

Another advantage is that it may be used for corn kernels prepared to be cooked without fat matter. Its very simple and functional constitution makes it possible to be structured in a cellulosic laminar material without the addition of special laminar layers or a multi-layer laminar material.

From a production point of view, this invention relates to a tub which is very easy to fill with kernels and it also has the advantage of having a low unit cost.

Another advantage is that, when it is disassembled, this tub is extremely flat, which simplifies its transportation and storage as well as its use by the user. Its expansion or widening is only made at the cooking time so that the cooking chamber in which the kernels shall burst until becoming popcorn be formed.

Even when constituted by a cellulosic laminar material, such as cardboard or thin cardboard, its expansion ability and its closure create conditions so that, under its exposure to microwaves, an appropriate increase of the inner temperature is produced within the cooking chamber, which has a favorable effect on a quick and efficient kernel cooking and burst process.

The particular constitution of the tub makes its handling by the consumer quick and simple. It also enables the easy conversion of the cooking receptacle into a delivery container from which the consumer may easily help himself.

### III. ILLUSTRATION

For a better clarity and understanding reasons of the object of the invention, it is illustrated by means of several figures in which it has been represented in one of its preferred embodiments as an example and not limitative way:

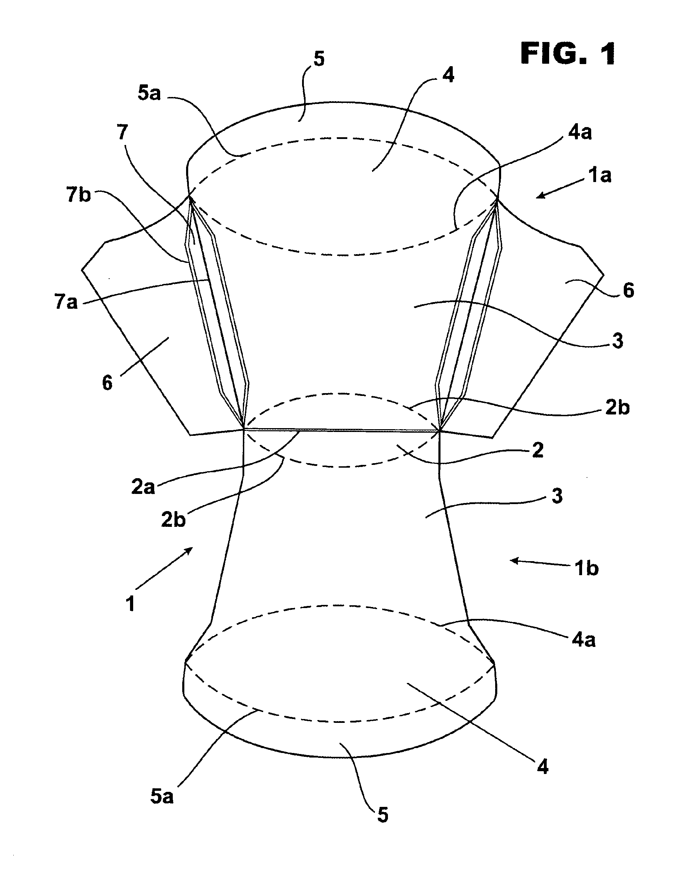

Figure 1 is an elevational top view of the die-pressed laminar sheet that integrates this unfoldable laminar tub.

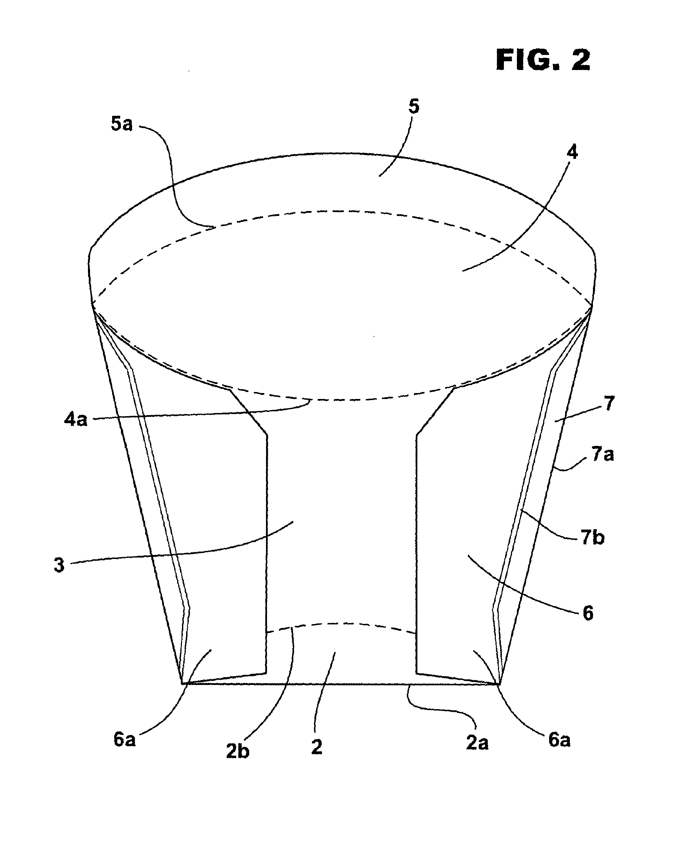

Figure 2 is an elevational rear side view of this assembled tub - without widening spreading - and with closed laminar edges, thus serving as a package for the kernels contained within the receptacle.

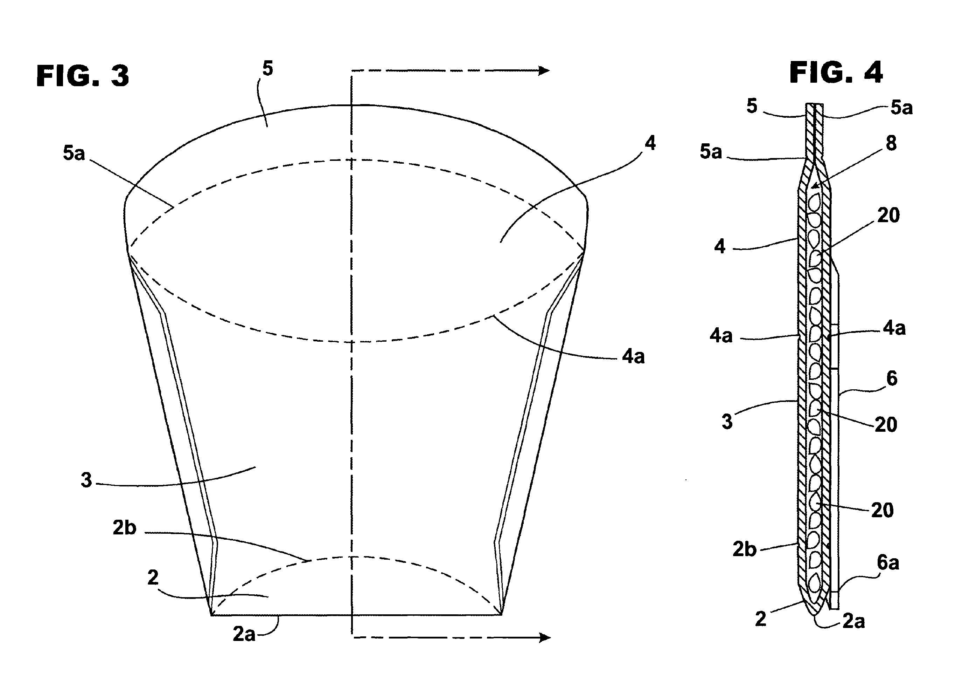

Figure 3 is an elevational front side view of this assembled tub - without widening spreading - with closed laminar edges.
Figure 4 is an upright cross-section view according to a section appearing indicated in Figure 3 which enables to see the receptacle closed with the corn kernels inside it.

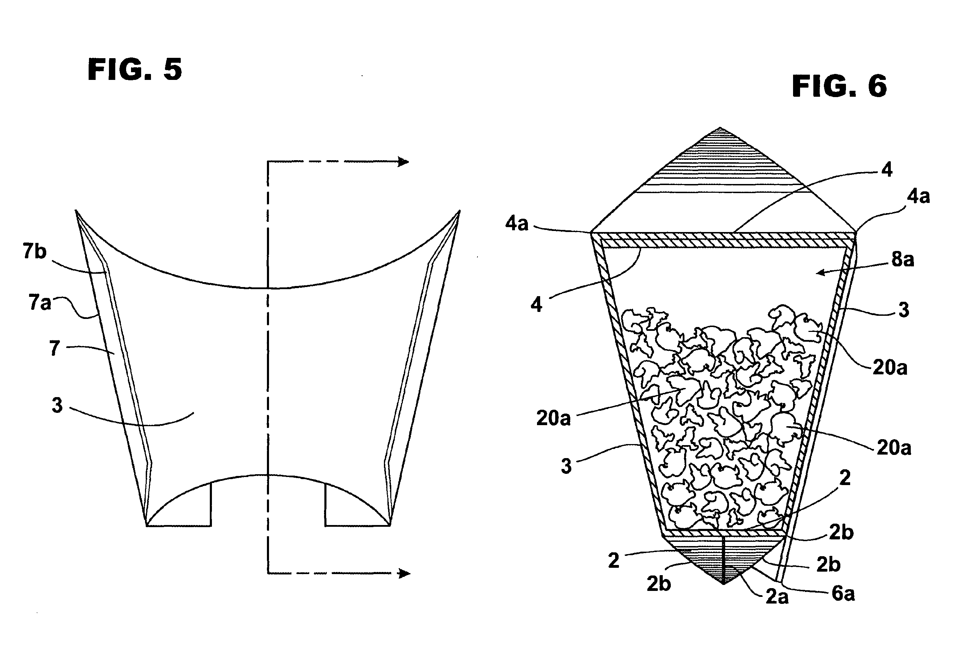

Figure 5 is an elevational front side view of this assembled tub after the widening spreading has been made.
Figure 6 is an upright cross-section view according to a section appearing indicated in Figure 5, which enables to see the receptacle already converted into a cooking chamber. In its inner side, the popcorn may be seen. The opening of the head portions converts the receptacle into a delivery container.

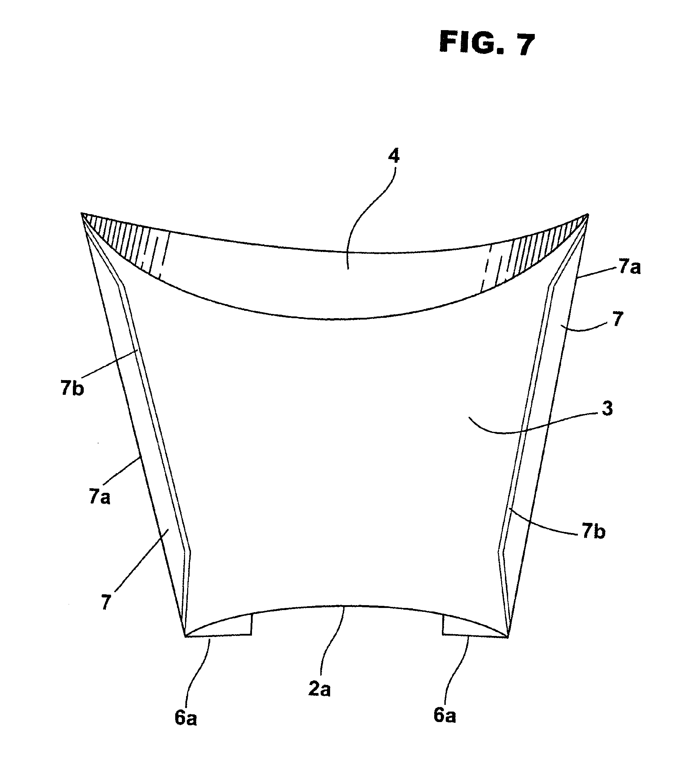

Figure 7 is a top perspective view of this assembled tub after the widening spreading has been made.
In the different figures, the same reference numbers indicate like or corresponding parts and the set of several elements have been indicated with letters.

### List of main references:

(1) Laminar sheet.
(1a) Front part of the laminar sheet (1).
(1b) Rear part of the laminar sheet (1).
(2) Base portion.
(2a) Central fold line of the base portion (2).
(2b) Base folding lines of the base portion (2) [They are
proximally located at both sides of the central folding line (2a)]
(3) Side walls.
(4) Head portions.
(4a) Head folding lines
(5) Detachable laminar edges
(5a) Detachment cutting line
(6) Linking flanges.
(6a) Bottom ends of the linking flanges (6).
(7) Supporting side portions.
(7a) Side folding line.
(7b) Supporting folding lines.
(8) Packaging closed receptacle.
(8a) Cooking chamber and delivery container
(20) Corn kernels.
(20a) Popcorn.

### IV. DESCRIPTION

Generally speaking, this invention refers to an unfoldable laminar tub for the packaging, cooking and delivery of popcorn comprising a closed receptacle (8) which contains corn kernels (20) without fat matter and a transversally unfoldable base portion (2) which determines the widening until forming a cooking chamber (8a) for microwaves. This cooking chamber (8a) is closed by means of head portions (4) which, after the cooking, may be opened to convert the cooking chamber (8a) into a delivery container of popcorn (20a).

### DETAILED DESCRIPTION

More particularly, this tub is formed from a die-pressed laminar sheet (1) in which a front part (1a) and a rear part (1b).

In this embodiment, both parts (1a)(1b) are joined at the level of a central folding line (2a) delimiting them. In other embodiments, both parts (1a) (1b) may be delimited by a side fold line which is common to their two side walls (3).

The tub is shaped by placing the front part (1a) opposite the rear part (1b) and the reciprocal joining - by means of sticking or any other suitable technique for said effect- between the detachable laminar edges (5) and the joining between the linking flanges (6) and the side walls (3). In these conditions, between both side walls (3) the closed packaging receptacle (8) remains formed within which there are corn kernels (20) prepared to be cooked without fat matter.

On the top of the tub, the detachable laminar edges (5) are extensions of the side walls (3), which are delimited by respective cutting or weakness lines (5a) that enable the cut to separate them.

The detachment of the detachable laminar edges (5) releases the access to the receptacle (8) and enables the deformation of the tub for its widening.

On the bottom part of the tub, there is a transversally unfoldable base portion (2). Within it, there is a central fold line (2a), and at both sides of said line there are two proximally located base folding lines (2b). For the transversal unfolding of the base portion (2), it is necessary to recess the central folding line (2a) inwards the receptacle (8), which is possible by folding said base folding lines (2b).

On the top part of the tub, the transversal unfolding remains supported by the depression of the head portions (4) which remain superimposed thus closing said top part and forming the cooking chamber (8a).

On the side part of the tub, there is a pair of side portions (7) which are transversally unfoldable until they are assembled as a transversal widening support. Each supporting side portion (7) comprises a side folding line (7a) which recession into the interior of the receptacle (8) is made possible by means of proximal supporting folding lines (7b).

With regard to the folding lines (4a) (2a) (2b) (7a) (7b), some or all of them may be partially die-pressed in order to coadjuvate with their folding function.

With regard to the constituting material, in view of the fact that this tub is particularly suitable for cooking corn kernels (20) prepared for its cooking without fat matter, it has been provided that it be comprised of a cellulosic laminar material. In this case, due to the absence of fat matter, it does not require especial or additional laminar layers.

### Set Operation:

The detachment of the detachable laminar edges (5) enables to deform the side walls (3) of the tub and depress the head portions (4) until they become superimposed thus closing the receptacle (8).

On the bottom part of the tub, the depression of the central folding line (2a) and the fold of the base folding lines (2b) cause the raising of the base portion (2) and drive the side widening of the receptacle (8).

The unfolding of the tub is completed in the side supporting portions (7) by means of the depression of the side folding lines (8a) and the folding of the supporting folding lines (7b). It takes places until said side portions (7) remain as widening transversal support of the receptacle (8), which in this way is converted into a cooking chamber (8a).

Under these conditions, the tub may be subjected to the action of a microwave oven until the kernels (20) burst out and become popcorn (20a).

After the cooking had been finished, the head portions (4) are opened and the cooking chamber (8a) is converted into a popcorn (20a) delivery container. For a better use, it has been provided that the linking flanges (6) finish in respective bottom ends (6a), which are the standing legs.

There is no doubt that when this invention is put into practice, several modifications may be made as to certain building and shape details are concerned and it does not mean that they going beyond the main principles clearly stated in the following claims.

After having specially described and determined the nature of this invention and the way in which it may be carried out, the following is claimed as of own right and ownership:

## Claims

**1.** UNFOLDABLE LAMINAR TUB FOR THE PACKAGINGG, COOKING AND DELIVERY OF POPCORN, which, being used for the cooking by a microwave oven of corn kernel including those prepared for cooking without fat matter, is useful as a packaging means, cooking chamber of kernels and container of popcorn, comprising:
- A die-pressed laminar sheet having folding and/or cutting lines which make it capable of being folded and unfolded,
**characterized in that** it comprises:
- a closed packaging receptacle capable of containing a portion of kernels suitable for cooking without fat matter;
- detachable laminar edges which, commonly leaned, closed the access to said closed receptacle;
- at least a base portion that, being transversally unfoldable with regard to the adjacent side walls, determines the widening of the receptacle until forming a cooking chamber of the kernels contained therein;
- said cooking chamber being comprised of at least a depressible head portion which provides a top closure of said widened receptacle; and
- said depressible head portion is capable of being opened for the conversion of said cooking chamber into a delivery container.

**2.** UNFOLDABLE LAMINAR TUB FOR THE PACKAGING, COOKING AND DELIVERY OF POPCORN, according to claim 1, **characterized in that** it is constituted by a die-pressed laminar sheet comprising a cellulosic material.

**3.** UNFOLDABLE LAMINAR TUB FOR THE PACKAGING, COOKING AND DELIVERY OF POPCORN, according to claim 1, **characterized in that** the detachable laminar edges are extensions of the side walls, to which regard said edges are delimited by respective cutting or weakness lines.

**4.** UNFOLDABLE LAMINAR TUB FOR THE PACKAGING, COOKING AND DELIVERY OF POPCORN, according to claim 1, **characterized in that** the base portion, which determines the widening of the receptacle until forming a cooking chamber of the kernels contained therein, is transversally unfoldable with regard to the adjacent side walls by means of a central folding line, which depression into the receptacle is enabled by the proximal base folding lines which, being in an active position, determine the raising of the base portion and the side widening of the receptacle.

**5.** UNFOLDABLE LAMINAR TUB FOR THE PACKAGING, COOKING AND DELIVERY OF POPCORN, according to claim 1, **characterized in that** in the side edges, it comprises respective supporting side portions which in relation to the adjacent side walls are transversally unfoldable until becoming a transversal widening support of the receptacle forming the cooking chamber of the kernels contained therein.

**6.** UNFOLDABLE LAMINAR TUB FOR THE PACKAGING, COOKING AND DELIVERY OF POPCORN, according to claim 5, **characterized in that** each side supporting portion comprises a side folding line which depression into the interior of the receptacle is made possible by means of proximal supporting folding lines which, in an active position, determine its construction as a supporting means of the receptacle widening.

**7.** UNFOLDABLE LAMINAR TUB FOR THE PACKAGING, COOKING AND DELIVERY OF POPCORN, according to claim 1, **characterized in that** it comprises two head portions which, as extensions of the respective side walls, are depressible until becoming superimposed as a top closure of the cooking chamber.

**8.** UNFOLDABLE LAMINAR TUB FOR THE PACKAGING, COOKING AND DELIVERY OF POPCORN, according to claim 1, **characterized in that** at least one of the side walls is laterally extended thus forming at least a linking flange with the opposite side wall.

**9.** UNFOLDABLE LAMINAR TUB FOR THE PACKAGING, COOKING AND DELIVERY OF POPCORN, according to claim 8, **characterized in that** one of the side walls forms linking flanges with the opposite side wall.

**10.** UNFOLDABLE LAMINAR TUB FOR THE PACKAGING, COOKING AND DELIVERY OF POPCORN, according to claim 8, **characterized in that** each side wall forms at least a linking flange with the opposite side wall.

**11.** UNFOLDABLE LAMINAR TUB FOR THE PACKAGING, COOKING AND DELIVERY OF POPCORN, according to claim 8, **characterized in that** the linking flanges end in bottom ends constituting standing means.

**12.** UNFOLDABLE LAMINAR TUB FOR THE PACKAGING, COOKING AND DELIVERY OF POPCORN, according to claim 1, **characterized in that** the front port and the rear part of the laminar sheet remain delimited by a central folding line of the base portion.

**13.** UNFOLDABLE LAMINAR TUB FOR THE PACKAGING, COOKING AND DELIVERY OF POPCORN, according to claim 1, **characterized in that** the front part and the rear part of the laminar sheet remain delimited by a lateral folding line which also delimits both side walls by one of their respective side edges while the opposite side edges and the base portion have respective flanges for the linking thereof.

**14.** UNFOLDABLE LAMINAR TUB FOR THE PACKAGING, COOKING AND DELIVERY OF POPCORN, according to claim 1, **characterized in that** it comprises at least one partially die-pressed folding line.

**15.** UNFOLDABLE LAMINAR TUB FOR THE PACKAGING, COOKING AND DELIVERY OF POPCORN, according to claim 1, **characterized in that** it comprises partially die-pressed base folding lines.

**16.** UNFOLDABLE LAMINAR TUB FOR THE PACKAGING, COOKING AND DELIVERY OF POPCORN, according to claim 1, **characterized in that** it comprises partially die-pressed supporting folding lines.

**17.** UNFOLDABLE LAMINAR TUB FOR THE PACKAGING, COOKING AND DELIVERY OF POPCORN, according to claim 1, **characterized in that** the side walls are capable of being deformed.
